# EUROPEAN PATENT APPLICATION

(11) **EP 4 206 485 A1**
(43) Date of publication of application: **05.07.2023**
(21) Application number: 22000271.1
(22) Date of filing: 27.12.2022
(51) Int. Cl.: F16D 3/10, F16D 3/18, F16D 3/24

(54) **A FLEXIBLE COUPLING WITH ASSEMBLY DEVIATION TOLERANCE AND LONGITUDINAL LOAD COMPENSATION**

(30) Priority: 28.12.2021 PL 44002821
(71) Applicant: Politechnika Slaska, 44-100 Gliwice (PL)
(72) Inventor: Mikula, Jaroslaw, 44-100 GLIWICE (PL); Kuczaj, Mariusz, 44-121 GLIWICE (PL); Filipowicz, Krzysztof, 42-580 WOJKOWICE (PL); Mikula, Stanislaw, 44-100 GLIWICE (PL)

(57) **Abstract**

A flexible coupling with assembly tolerances and longitudinal load compensation, connecting the shafts (3) and (5), characterised in that it has an inner disc (4) mounted on the shaft (5) and placed between the two outer discs (1) and (2) coupled to each other with coupler balls (6) running in guides (7) and (8), with two guides (7) and (8) being assigned to each of the coupler balls (6), one in the outer disc (1) and one in the inner disc (4). The coupling has at least three coupler balls (6) on each side of the coupling. The coupling has liners (16) and (17) placed in guides provided in discs (1), (2) and (4).

## Description

This invention relates to a mechanical flexible coupling with assembly deviation tolerance and longitudinal load compensation, in which the longitudinal loads are fully compensated and a high resistance to assembly deviations of the coupling is assured for the drive systems of machines and devices.

It is desirable for drive systems of numerous machines to have high torsional flexibility at start-up and the lowest possible sensitivity to the unavoidable geometrical deviations that frequently occur under operating conditions when drive system components are assembled. This is applicable in particular to deviations relating to the position in space of the rotation axes of coupled systems. Under service conditions in which many machines are used, it is impossible to assure a sufficiently accurate mutual alignment of the coupled systems considering the difficulty of using suitable measuring instruments. Also, axis misalignments such as skewness, eccentricity or longitudinal misalignment of the coupled components frequently occur as a consequence of deformation of the system components. Moreover, the magnitudes of these deviations under operating conditions change over time as a result of elastic and permanent deformation from high loads as well as wear and tear. In the vast majority of drive systems, it is highly desirable for couplings to generate no longitudinal loads. The requirements described are fulfilled by the coupling according to the invention. These objectives were achieved by using a special design of a torsionally flexible coupling, in which longitudinal loads are self-compensated during service, with the coupling transmitting torque only.

State-of-the-art designs of mechanical flexible couplings rely on the use of highly flexible rubber, polymer or composite components. Coupling designs are given a broad overview in: Markusik S.: "Mechanical couplings", WNT, Warsaw 1977. The use of flexible couplings in service machinery drives is described in:
Markusik S., Opasiak T., Gruszka P.: "Drives for continuous transport machines with a flexible coupling", Transport Przemyslowy, No. 1/2006. Selected flexible coupling designs are also described in the academic textbook by Dietrich M., Markusik S. entitled "Fundamentals of machine design", WNT 1999. A description of various coupling designs can also be found in the work of Skoć A., Spalek J., Markusik S. "Fundamentals of machine design" vol. 2, WNT Warsaw 2008, including a flexible coupling relying on polymer elasticity, as well as powder couplings.

All state-of-the-art designs of flexible mechanical couplings possess limited torsional flexibility, in addition to having a short service life and a limited tolerance for assembly deviations that frequently occur under real service conditions in which couplings of many service machines are used. Coupling designs utilising polymeric materials fall short of the requirement of complete non-flammability, preventing their use in deep mining. Another disadvantage is the strong impact of temperature on their mechanical properties. These couplings generate increasing longitudinal loads on the coupled drive system, particulary with progressing wear and tear. Increasing wear of state-of-the-art couplings also often results in excessive vibrations and noise.

This invention relates to a flexible coupling with assembly deviation tolerance and longitudinal load compensation for connecting shafts, characteristic in that it has an inner disc mounted on a shaft and placed between two outer discs coupled to each other with balls running in guides, with two guides assigned to each of the coupler balls, one in the outer disc and one in the inner disc.
The coupling has at least three coupler balls (6) on each side of the coupling.
The coupling has liners housed in guides provided on the discs. Its interior is filled with liquid. The coupling has fan rotors fixed to the discs. The inner disc is mounted on the shaft by means of a barrel-shaped multi-toothed/toothed interface. The coupling is equipped with return springs. The coupling has ribs in the discs where the guides are provided.

The figure illustrates an embodiment of the mechanical coupling with torsional flexibility, with a large tolerance for assembly deviations and with full compensation of longitudinal loads according to the invention. Fig. 1 is a longitudinal cross-section of the basic version of the coupling, Fig. 2 is a cross-section along the A-A plane, Fig. 3 is a longitudinal cross-section of the coupling fitted with reinforced guide liners (A-side), Fig. 4 is the coupling viewed in the "K" direction and Fig. 5 illustrates a variant of the coupling equipped with a stabilising bearing and a fan rotor cooling system.

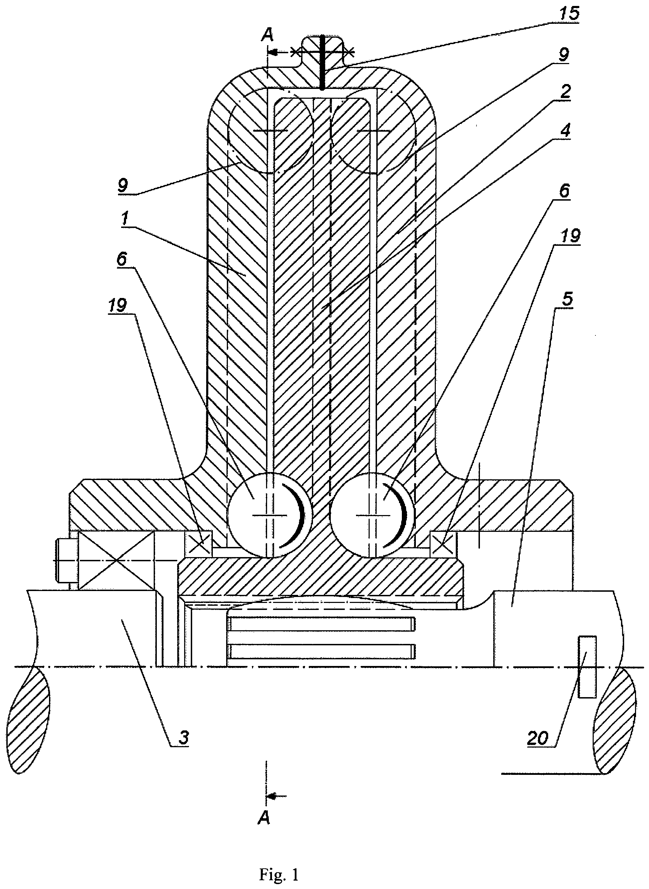

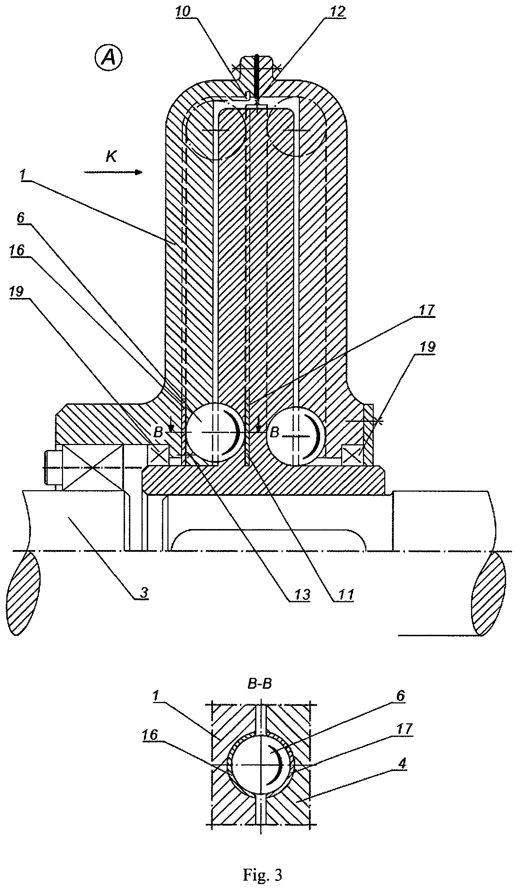

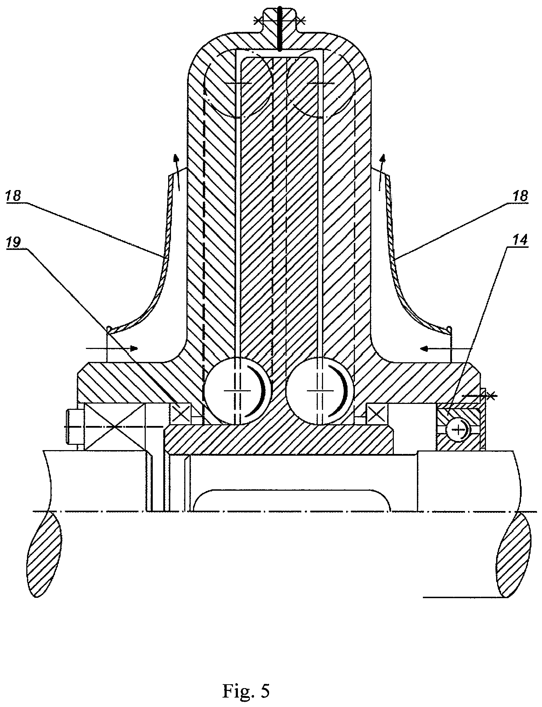

The coupling according to the invention can be installed on typical shaft ends of the drive and propelling unit by means of well-known and commonly used keyed (Fig. 3 and 5), splined and multi-spline connections as well as with spacer rings (Fig. 1, 3 and 5). Multi-toothed and toothed connections are advantageously manufactured to allow for greater angular deviations of the parts to be joined, for example, by giving the connections a barrel-like shape (Fig. 1). The main components in the form of coupling discs are preferably made by casting with a machined finish. Preferably, steel or carbide balls are used as coupler components. These can be balls from typical ball roller bearings, including second-hand ones, as long as they do not display any pitting damage.

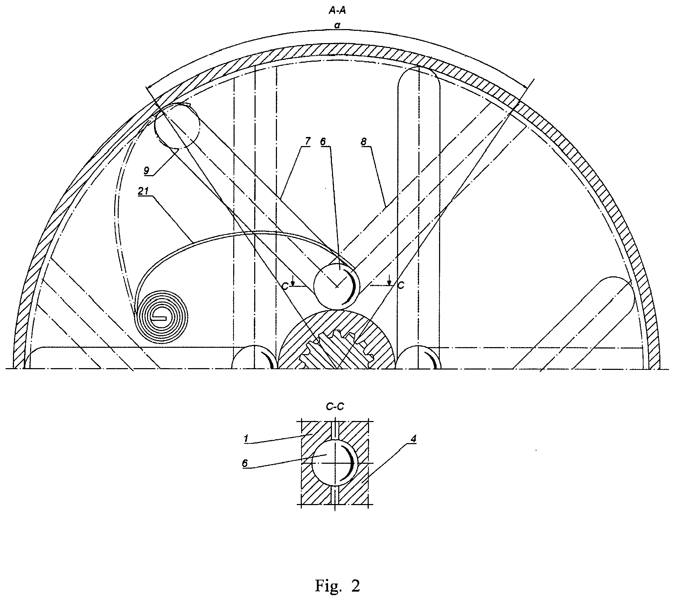

Two flanged outer discs **1** and **2** mounted on the shaft **3** are fixed to the inner disc **4** mounted on the shaft **5** by means of coupler balls **6.** The coupler balls **6** have the capability to run in guides **7** and **8** made diagonally in the radial direction within the outer discs **1** and **2** and within the inner disc **4.** Fig. 2 shows a view of the guides **7** in the outer disc **1** and the interrupted line illustrates the outline of the guide **8** in the inner disc **4.** Only two guides are assigned to each of the coupler balls **6,** one in the outer disc and one in the inner disc. The coupler balls **6** may only be located at the intersections of their assigned guides **7, 8** in the discs, and may roll simultaneously only in both their assigned guides **7, 8.** The guides in the outer discs **1** and **2** have an outline that is a mirror image of each other.

At start-up, the coupler balls **6** are in the starting position closest to the axis of rotation of the discs, as shown in Fig. 1 and 2. As the speed ramps up, there is a synchronous and simultaneous movement of all the balls on both sides of the coupling towards the circumference of the discs to the extreme outer positions **9.** This results in a growing difference in the angle of rotation of the outer disc assembly in relation to the inner disc. Thus, the torsional flexibility of the coupling is achieved. The full angular range of torsional flexibility of the coupling is determined by the angle a (fig.2). The movement of the balls in the guides occurs as a result of the rolling of the balls in their assigned guide pairs under the action of the component forces acting on the balls from the transmitted instantaneous torque. Also, ball movement is facilitated by centrifugal forces acting on the balls and dependent on the instantaneous, increasing rotational speed of the discs and the instantaneous length of the radius at which the balls are located relative to the axis of rotation.

With the described design, a very advantageous feature of the coupling according to the invention is achieved in that, at start-up, the mass moment of inertia of the coupling is the smallest due to the extreme instantaneous starting position of all the coupler balls. With the full symmetry of the discs and the always synchronous movement of all the balls, there is full and constant static and dynamic balancing of the coupling. At the same time, there is a complete internal balancing of the longitudinal forces. As a result, the coupling does not generate any external longitudinal loads at any stage of its operation and only transmits torque.

Once the coupling comes to a stop, the coupler balls must be brought to the starting position that ensures the least starting load. This can be achieved in a number of ways. In mechanical systems where the mass moment of inertia of the driven part of the system and the coast-down time after stopping are greater than the corresponding parameters of the driving side (motor), this occurs automatically. When the motor is switched off, the kinetic energy of the rotating mass flows through the coupling in the reverse direction, i.e. to the motor, causing the coupler balls to roll back to the starting position. The system is then automatically primed for restart with a minimum starting load. It is also possible to fit the coupling discs with spiral return springs **21** (Fig. 2). In these cases, wherever possible, the opposite direction of rotation of the motor can be switched on for a very short time in order to cause the coupler balls to move to the starting position. Alternatively, the motor shaft can be turned in a different way (by hand) by using, for example, a spanner applied to the bevel **20** in the direction opposite to the operating direction, so that the inner disc rotates by an angle at least equal to angle a. The same can be achieved by turning the outer disc assembly **1** and **2** in the main operating direction.

The design of the coupling ensures a high tolerance to the assembly deviations of the coupled shafts **3** and **5.** Distance deviations are compensated at the shafts within a wide range through the longitudinal displacement of the sliding connection of the shaft **5** relative to the hub of the inner disc **4.** (Fig. 1). Axial misalignment of the two coupled shafts is compensated by the barrel-shaped design of the toothed/multiple-toothed connection (Fig. 1). The eccentricity of the coupled shafts can be tolerated within the clearance between the inner disc **4** and the disc assemblies **1** and **2,** as well as within the flexibility range of rotary seals **19.**

The large tolerance of the coupling to assembly deviations allows the coupling to be used effectively in many cases of operational difficulties with assembly. Thanks to the design of the coupling, assembly deviations such as axle skew and shaft offset deviations do not affect the operation of the internal components of the coupling.

In the case of frequent start-ups, the work of the balls rolling in the guides, transformed into heat may cause an undesirable excessive rise in the temperature of the coupling, which can result, for example, in an excessive drop in oil viscosity. To minimise ball friction and reduce wear on the balls and guides, the inside of the coupling can be filled with oil of the appropriate viscosity or the coupling guides can be lubricated with a plastic grease when joining the discs. In the event that the inside of the coupling is filled with oil or other fluid, it is necessary to use suitable rotary seals **19.**

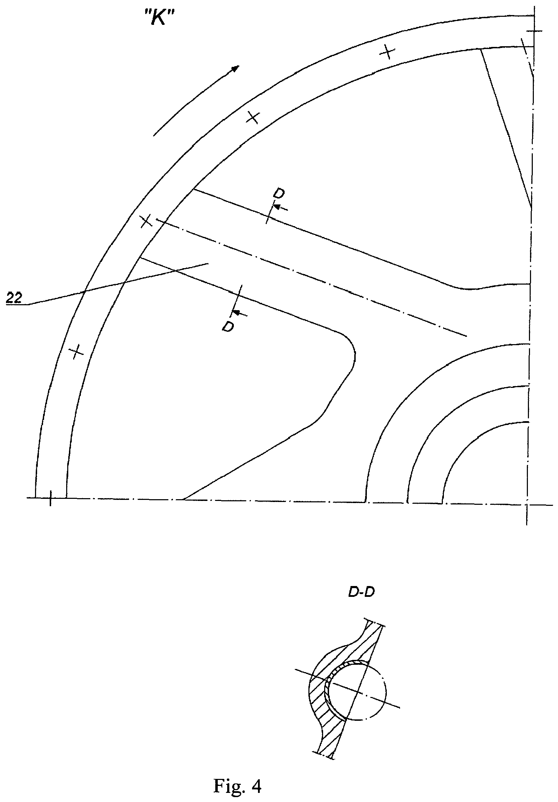

In addition to its lubricating function, another beneficial function of the oil inside the coupling is the viscous damping of excessively fast movement of the coupler balls, especially at the start-up stage. The presence of oil in the coupling, combined with the shape of the guides, results in an additional hydraulic coupling effect at the start-up stage, analogous to the operation of hydrokinetic coupling. These influences are strongly dependent on the viscosity of the oil and the clearance between the discs. They have a very beneficial effect on the coupling, improving its performance but increasing its operating temperature. When the natural cooling of the coupling by convection and radiation is insufficient, it is possible to attach fan impellers **18** (Fig. 5) for forced cooling by air flow. The design of the coupling offers considerable scope for adaptation to the operating conditions. When it is particularly desirable to minimise starting resistance in the drive system, the coupling discs, especially the outer discs, can be made as Al-Mg light alloy castings, with the discs shaped as shown in Fig. 4. Not only does this significantly reduce the mass moment of inertia of the discs, but also the ribs **22** in the discs at the guide locations act as vanes to intensify heat exchange with the environment. The inner coupling disc can also be shaped in a similar way.

To minimise wear on the guides in light alloy discs, additional liners **16** and **17** should be used (Fig. 3, side A). Liners are preferably made from thin-walled steel tubes after they have been cut lengthwise. The linings can be attached by chemical bonding with additional section reinforcement, if necessary, made of **10** and **11** studs and screws **12** and **13.** The manganese steel liners are preferably subjected to a hardening heat treatment and, if necessary, to additional strengthening by surface crushing, for example by cold-drawing or shot-blasting of the liner blanks. This solution allows the wall thickness of the coupling discs to be considerably thinner while at the same time increasing the contact load capacity. This serves to further reduce the deadweight of the coupling while also improving its performance. Glue adhesion can be increased by applying a greater roughness when milling the grooves provided for the guide liners. The described solution serves to considerably improve the strength of the coupling components, especially if balls from roller bearings (possibly second-hand ones) with high smoothness and hardness are used as coupler balls.

On larger couplings, a roller bearing **14** (Fig. 5) can be optionally fitted to stabilise the position of the outer disc assembly **1** and **2** relative to the shaft **5.** This bearing only works at start-up and only carries a possible latitudinal load, hence its long service life. Whenever an additional bearing is not needed, the outer disc boss can be cut off as shown by the dotted line in Fig. 1. However, leaving the above-mentioned boss can be helpful if the coupling needs to be remounted in a right-to-left arrangement. This is the case, for example, when there is a permanent change in the direction of rotation of the motor and the same coupling specimen is used.

The technical performance of the coupling depends mainly on the external diameter of the discs, the number and weight of the coupler balls, the viscosity of the coupling oil and the clearance between the coupling discs. For most applications, the coupling parameters should be selected so that in steady-state motion the coupler balls occupy the outer extreme position. In this case, the entire coupling with any oil filling it acts as a flywheel to stabilise the rotational speed of the system by viscous damping of the oscillations produced by the variation in resistance of the mechanical system in which the coupling is installed.

The coupling according to the invention is characterised by a very long service life, as its components only interface in motion at the start-up stage and to a lesser extent during coasting. Contact pressures of the balls on the guides are minimised as a result of the maximum radius of the transmitted torque in steady-state motion.

The coupling responds well to regeneration treatments after considerable operating mileage. For this purpose, it is sufficient to compensate for the excessive clearance between the coupler balls and the guides. This can be easily achieved by reducing the corresponding thickness of the sealing washer **15** in the flange connection of the outer discs (Fig. 1). If necessary, the thickness of the flanges may be further reduced and the inner surfaces of the discs may be machined on a lathe.

The coupling is completely maintenance-free, generates no noise or vibration and is fully protected against external influences in the form of dust or moisture. The coupling is basically designed for operation in one direction of rotation. However, it is possible to make special use of the coupling design for reversible operation. If the directions of inclination of the guides in one part of the coupling are changed to the opposite, the coupling will operate as flexible in both directions of rotation. Then, alternately one side and the other work as described before, and the opposite side moves its balls automatically to the centre of the coupling. When used in this way, the coupling will retain all the advantages described, with the exception of the ease of start-up due to the minimised mass moment of inertia. In such an application, the coupling will have a virtually constant mass moment of inertia, as the balls on either side of the coupling will always move in opposite directions. The maximum load-bearing capacity of the coupling will also decrease, as only half of the coupler balls contribute to the load transferred from the torque. The other advantages of the coupling will be maintained. The coupling used as described above has the advantage that the two outer discs are then exactly identical, reducing manufacturing costs.

The coupling according to the invention, especially in its basic form, enables the use of these power surpluses of the drive motors envisioned due to the method of start-up of the machine systems. This is particularly important with electric motor drives. Less surplus power allows for a more efficient use of electricity while also improving the power factor coscp. At the same time, it reduces the starting load on all drivetrain components, while improving their service life. Thanks to internal compensation of longitudinal loads, the coupling does not generate additional external loads on other components of the drivetrain The coupling design ensures that it is only slightly sensitive to assembly deviations unavoidable in the harsh operating conditions of many machines and equipment. It is characterised by high strength and complete maintenance-free operation. The use of couplings according to the invention achieves high technical and economic effects, while also improving safety during the use of machinery.

## Claims

1. A flexible coupling with tolerance of assembly deviations and compensation of longitudinal loads, used to connect the shafts (3) and (5), **characterised in that** it has an inner disc (4) mounted on the shaft (5) and placed between the two outer discs (1) and (2) coupled to each other with balls (6) running in guides (7) and (8), with two guides (7) and (8) assigned to each of the coupler balls (6), one in the outer disc (1) and one in the inner disc (4).

2. A coupling according to claim 1, **characterised in that** it has at least three coupler balls (6) on each side of the coupling.

3. A coupling according to claim 1, **characterised in that** it has liners (16) and (17) located in guides provided in the discs (1), (2) and (4).

4. A coupling according to claim 1, **characterised in that** its interior is filled with liquid.

5. A coupling according to claim 1, **characterised in that** it has fan rotors (18) attached to discs (1) and (2).

6. A coupling according to claim 1, **characterised in that** the inner disc (4) is mounted on the shaft (5) by means of a barrel-shaped multi-tooth/toothed connection.

7. A coupling according to claim 1, **characterised in that** it has return springs (21).

8. A coupling according to claim 1, **characterised in that** it has ribs (22) in the discs at the locations of the guides (7), (8).
